# EUROPÄISCHE PATENTANMELDUNG

(11) **EP 4 702 949 A1**
(43) Veröffentlichungstag der Anmeldung: **04.03.2026**
(21) Anmeldenummer: 24197783.4
(22) Anmeldetag: 01.09.2024
(51) Int. Cl.: A61C 9/00

(54) **BISSGABEL**

(71) Anmelder: Alwaflex AG, 5430 Wettingen (CH)
(72) Erfinder: Alraun, Egon, 5426 Lengnau (CH)
(74) Vertreter: Fenner, Seraina

(57) **Zusammenfassung**

Bissgabel zum Positionieren des Ober- und Unterkiefers während einer Erstellung eines Scans oder Abdrucks für eine Zahnschiene, beinhaltend eine sich entlang einer Längsachse x erstreckende, einen Zahnführungsbereich aufweisende Gleitschiene, eine x,y-und z-Achse, einen am einen Ende der Gleitschiene angeordneten Griff und mindestens zwei am anderen Ende der Gleitschiene, sich gegenüberliegend angeordnete Aufleger, wobei die Aufleger sich rechtwinklig zur Längsachse x erstrecken, wobei die Gleitschiene mindestens über den Zahnführungsbereich einen Querschnitt aufweist, der in y-Richtung keilförmig in eine zur Längsachse x parallel verlaufende Gleitkante zusammenläuft.

## Beschreibung

Die Erfindung betrifft eine Bissgabel zum Positionieren des Ober- und Unterkiefers während einer Erstellung eines Scans oder Abdrucks für eine Zahnschiene oder ein anderes zahnmedizinisches Hilfsmittel beinhaltend, eine sich entlang einer Längsachse x erstreckende, einen Zahnführungsbereich aufweisende Gleitschiene, eine x-, y- und z-Achse, einen am einen Ende der Gleitschiene angeordneten Griff und mindestens zwei am anderen Ende der Gleitschiene, sich gegenüberliegend angeordnete Aufleger, wobei die Aufleger sich rechtwinklig zur Längsachse x erstrecken.

Für die Anfertigung einer Zahnschiene benötigt es eine geöffnete Position des Ober- und Unterkiefers in einer definierten Relation zueinander. Um diese Position im Mund zu fixieren, werden derzeit Wachs-Wall-Bisse oder sonstige Bissgabeln verwendet. Diese Bissgabeln sind in ihrer Anwendung meist sehr zeitintensiv, ungenau und unpraktisch in der Anwendung. Zudem sind die meisten Bissgabeln entweder für die analoge Bissaufnahme oder für die digitale Bissaufnahme ausgebildet, jedoch nicht für beide Anwendungen einsetzbar.

Die EP 3 242 627 A1 offenbart ein Begrenzungselement der Zahnbogengeometrie. Das Begrenzungselement umfasst einen Mundeinsatz, der sich über eine Okklusalfläche eines Zahnbogens erstreckt, um mindestens drei Bezugsmerkmale starr zu verbinden. Das Begrenzungselement weist einen verstellbaren Arm in sagittaler Richtung auf, an dem ein Encoder oder eine markierte Skala zur Bestimmung der Position angeordnet ist. Nachteilig dabei ist, dass der Unterkiefer nicht geführt ist und sich in transversaler Richtung verschieben lässt.

Nachteilig bei den bekannten Bissgabeln ist, dass eine exakte Protrusion in sagittaler Richtung zur Erstellung eines Scans oder Abdrucks kaum erzeugt werden kann, da sich die Kiefer immer leicht in der transversalen Ebene zueinander verschieben lassen. Daher dauert ein Bissfindungs-Prozess relativ lange und die Kiefermuskulatur des Patienten übersäuert, wodurch der Unterkiefer zu zittern beginnt.

Es ist Aufgabe der Erfindung eine Bissgabel vorzuschlagen, welche es ermöglicht innert kürzester Zeit eine exakte Bissnahme zu ermöglichen, die sich für analoge wie auch digitale Bissnahmen einsetzen lässt.

Diese Aufgabe wird erfindungsgemäss dadurch gelöst, dass die Gleitschiene mindestens über den Zahnführungsbereich einen Querschnitt aufweist, der in y-Richtung keilförmig in eine zur Längsachse x parallel verlaufende Gleitkante zusammenläuft. Die Gleitkante dient der Führung des Kiefers indem die Gleitkante in das zentrale Schneidezahnkreuz ragt, wenn die Bissgabel im Mund positioniert ist. Dadurch lässt sich eine exakte Protrusion des Ober- und Unterkiefers in sagittaler bzw. x-Richtung erzeugen, was wiederum eine rasche Bissfindung gewährleistet.

Die erfindungsgemässe Bissgabel dient dem Positionieren des Ober- und Unterkiefers während einer Erstellung eines Scans oder Abdrucks für eine Zahnschiene. Selbstverständlich dient die erfindungsgemässe Bissgabel auch zum Positionieren des Ober- und Unterkiefers für die Anfertigung eines kieferorthopädischen Geräts wie, Aufbiss-Platten, Aufbiss-Schienen, Monoblocks, Michigan-Schiene, Twin-Blocks, Unterkiefer-Protrusions-Schienen etc.. Die erfindungsgemässe Bissgabel lässt sich für einen digitalen Scan des Gebisses wie auch für einen analogen Abdruck einsetzen. Die erfindungsgemässe Bissgabel beinhaltend eine sich entlang der Längsachse x erstreckende, einen Zahnführungsbereich aufweisende Gleitschiene. Der Zahnführungsbereich erstreckt sich vorzugsweise über den Bereich der Gleitschiene in den die Zähne, während der Bissnahme greifen, vorzugsweise ist der Bereich in der Mitte der Gleitschiene angeordnet. Es ist vorteilhaft, wenn sich der Zahnführungsbereich über mindestens einen Viertel der Gleitschiene erstreckt. Die Bissgabel beinhaltet zudem einen an einem Ende der Gleitschiene angeordneten Griff, wobei der Griff vorzugsweise integral an der Gleitschiene anschliesst bzw. die Gleitschiene und der Griff zusammen einteilig ausgebildet sind. Am anderen Ende der Gleitschiene sind mindestens zwei gegenüberliegende Aufleger angeordnet, wobei die Aufleger sich rechtwinklig zur Längsachse x erstrecken und somit auch rechtwinklig zur Gleitschiene. Die sich gegenüberliegenden Aufleger und die dazwischen angeordnete Gleitschiene mit dem daran angeordneten Griff weisen somit eine T-Form auf. Die Gleitschiene weist mindestens über den Zahnführungsbereich einen Querschnitt auf, der in y-Richtung keilförmig in eine zur Längsachse x parallel verlaufende Gleitkante zusammenläuft. Diese längsverlaufende Keilform, die durch die Gleitkante und zwei Keilflächen entlang der Gleitschiene gebildet ist, ermöglicht es, den Kiefer über das zentrale Schneidezahnkreuz exakt in sagittaler bzw. x-Richtung zu führen, da die Gleitkante bzw. die Keilform, wenn die Bissgabel im Mund positioniert ist im zentralen Schneidezahnkreuz verläuft.

Es ist vorteilhaft, wenn der Querschnitt der Gleitschiene zumindest im Zahnführungsbereich jeweils nach unten und oben in y-Richtung keilförmig in eine zur Längsachse x parallel verlaufende Gleitkante zusammenläuft. Dies ermöglicht eine exakte sagittale Führung des Ober- und Unterkiefers, was eine rasche Durchführung des Scans oder Abdrucks erlaubt. In dem die obere und untere Gleitkante jeweils in das zentrale Schneidezahnkreuz ragt, tritt bei einer sagittalen Protrusion keine transversale Verschiebung auf. Dadurch lassen sich die unterschiedlichen Stellungen des Kiefers zur Bissfindung schnell umsetzen und eindeutig erfassen.

Als bevorzugte Ausführungsform hat sich gezeigt, dass die beiden Aufleger und die Gleitkante ausschliesslich drei Auflagepunkte für den Ober- und Unterkiefer bilden. Die Aufleger bilden die beiden hinteren Punkte für den Molaren-Bereich jeweils in der linken und rechten Zahnreihe von Ober- und Unterkiefer und der vordere Punkt in der Mitte wird durch das zentrale Schneidezahnkreuz gebildet. Dies gewährleistet eine stabile Position des Kiefers. Ansonsten liegt der Kiefer während des Bissnahme-Prozesses nirgends auf. Zudem bringt es den Vorteil mit sich, dass durch die ausschliesslichen drei Auflagepunkte die Zahnreihen labial und bukkal frei zugänglich sind. Es ist vorteilhaft, dass die Gleitschiene distal fixierbar ist, wodurch der vordere Auflagepunkt gebildet ist. Die beiden hinteren Auflagepunkte sind vorzugsweise okklusal positionierbar.

Vorzugsweise ist die Gleitschiene zumindest entlang des Zahnführungsbereichs, als ein sich entlang der Längsachse erstreckendes, gerades Prisma ausgebildet. Dies ermöglicht eine lineare Verschiebung des Ober- und Unterkiefers zueinander, während die Zahnzwischenräume der Schneidezähne bzw. das zentrale Schneidezahnkreuz mit der Gleitkante fixiert werden.

Als bevorzugt hat sich gezeigt, wenn die Gleitschiene zumindest über den Zahnführungsbereich einen polygonförmigen Querschnitt aufweist. Es ist vorteilhaft, wenn das Polygon entlang der y-Achse symmetrisch ausgebildet ist. Zudem ist es vorteilhaft, wenn das Polygon entlang der y-Achse spitz zuläuft und eine obere und untere Ecke bildet, die wiederum die obere und untere Gleitkante bildet. Somit ist es vorteilhaft, wenn der Zahnführungsbereich als Prisma mit einem Polygon als Querschnitt ausgebildet ist.

Vorzugsweise sind entlang der Gleitschiene bzw. der oberen Gleitkante Einbissrillen angeordnet. Die Einbissrillen erstecken sich quer zur Gleitschiene. Es ist vorteilhaft, wenn auch der Querschnitt der Gleitschiene im Bereich einer Einbissrille sich in y-Richtung keilförmig erstreckt. Vorzugsweise weist die Gleitschiene eine bis 6 Einbissrillen auf. Die Einbissrille gewährleistet eine sichere, stabile und nicht verschiebbare Position des Oberkiefers und gewährt dem Patienten einen entspannten Bissfindungs-Prozess.

Als vorteilhaft hat sich auch gezeigt, wenn an der Unterseite der Gleitschiene zumindest über den Zahnführungsbereich ein Wellenprofil angeordnet ist, wodurch eine einfache Positionierung des Unterkiefers ermöglicht wird. Dies ermöglicht eine Positionserfassung des Unterkiefers ohne manuelle Kerbvorsehung während des Bissfindungs-Prozesses, wodurch der Patient das untere zentrale Schneidezahnkreuz im Wellenprofil einrasten kann.

Wahlweise sind die Auflager abnehmbar als separate Teile ausgebildet. Dadurch können an die Gleitschiene entsprechend des Einsatzes die passenden Aufleger angebracht werden. Beispielsweise sind die Aufleger mit einer Perforation ausgebildet, die für einen Silikon- oder Wachsabdruck geeignet ist, um zu gewährleisten, dass das Silikon oder der Wachs unverschiebbar am Aufleger angeordnet ist. Es ist vorteilhaft, wenn die Aufleger an der Gleitschiene an- bzw. einsteckbar sind. Selbstverständlich kann eine Perforation auch an Auflagern angeordnet sein, die einteilig bzw. integral an der Gleitschiene angeordnet sind.

Es ist vorteilhaft, wenn die Auflager sich parallel zur z-Achse erstrecken. Dies gewährleistet, dass der Molar-Bereich, wie auch die Schneidezähne während des Bissfindungs-Prozesses in einer Ebene positioniert sind.

Als bevorzugte Ausführungsform hat sich gezeigt, wenn die Aufleger integral bzw. einteilig an der Gleitschiene angeordnet sind. Vorzugsweise bildet die Bissgabel dadurch ein einteiliges bzw. einstückiges Teil das eine Gleitschiene, einen Griff und Aufleger aufweist. Aufgrund dessen wird vermieden, dass die Bissgabel in sich bereits instabil ist und wackeln kann. Zudem gewährt dies eine wirtschaftliche Herstellung da kein Montageprozess benötigt wird.

Vorzugsweise weisen die Aufleger eine Perforation oder Struktur an der Oberfläche für eine gute Haftung des Wachses oder Sillikons auf. Die Perforation ist vorzugsweise als durchgehende Öffnungen in dem als Platte ausgebildeten Aufleger umgesetzt. Die Öffnungen können als Schlitze oder Bohrungen ausgebildet sein. Alternativ besteht auch die Möglichkeit einer Struktur an der Oberfläche der vorzugsweise als Platten ausgebildeten Auflegern. Die Struktur ist vorzugsweise durch Erhebungen in der Oberfläche der Aufleger ausgebildet um das Silikon oder das Wachs zu fixieren.

Es ist vorteilhaft, wenn die Aufleger plattenförmig ausgebildet sind. Alternativ besteht auch die Möglichkeit, dass die Aufleger zylindrisch sind oder die Form einer Halbkugel aufweisen, wobei es vorteilhaft ist, wenn an den Auflegern, unabhängig welche Form sie aufweisen, ein Aufbiss-Element angeordnet ist. Dies verschafft der Bissgabel die nötige Elastizität im Molar-Bereich. Das Aufbiss-Element besteht vorzugsweise aus einem Elastomer.

Für eine besser Handhabe ist es vorteilhaft, wenn der Griff in einem Winkel zur Längsachse x verläuft. Vorzugsweis verläuft der Griff abgewinkelt nach unten. Um die Sicht auf die unteren mittleren Schneidezähne zu gewährleisten ist im Griff vorzugsweise ein Sichtfenster integriert. Auch der abgewinkelte Griff ist vorzugsweise integral an der Gleitschiene angeordnet.

Als vorteilhafte Ausführung hat sich gezeigt, wenn die Aufleger durch mindestens jeweils zwei sich gegenüberliegende, hintereinander angeordnete Laschen gebildet sind. Die Laschen sind vorzugsweise in y-Richtung fächerartig hintereinander angeordnet, wodurch die gewünschte Elastizität der Aufleger generiert wird. Alternativ sind die Laschen in x-Richtung hintereinander und in einem Winkel zueinander angeordnet.

Vorzugsweise ist die Bissgabel aus einem der Materialen, Kunststoff, Nylon, Holz, Metall oder einem Verbundmaterial hergestellt.

Als vorteilhaft hat sich gekennzeichnet, wenn die Bissgabel durch 3D-Druck hergestellt ist. Dies gewährleiste eine hohe Flexibilität in der Formgestaltung der Bissgabel bzw. der Aufleger und der individuellen Anpassungen.

Alle Ausgestaltungmöglichkeiten sind untereinander frei kombinierbar.

Ausführungsbeispiele der Erfindung werden anhand der Figuren beschrieben, wobei sich die Erfindung nicht nur auf die Ausführungsbeispiele beschränkt. Es zeigen:
- Fig. 1: eine dreidimensionale Darstellung einer Variante einer erfindungsgemässen Bissgabel mit daran angeordneten Aufbiss-Elementen,
- Fig. 2: eine dreidimensionale Darstellung einer Kieferstellung während der Durchführung des Scans für die Bissnahme mit einer erfindungsgemässen Bissgabel,
- Fig. 3: eine dreidimensionale Schnittansicht der Gleitschiene,
- Fig. 4: eine dreidimensionale Darstellung einer Variante einer erfindungsgemässen Bissgabel mit separat ausgebildeten Auflegern,
- Fig. 5: eine dreidimensionale Darstellung einer Variante einer erfindungsgemässen Bissgabel mit integral an der Gleitschiene angeordneten Auflegern,
- Fig. 6: eine dreidimensionale Darstellung einer Variante einer erfindungsgemässen Bissgabel mit Aufbiss-Elementen an den Auflegern,
- Fig. 7: eine dreidimensionale Darstellung einer Variante einer erfindungsgemässen Bissgabel mit fächerartig übereinander angeordneten Auflegern und
- Fig. 8: eine dreidimensionale Darstellung einer Variante einer erfindungsgemässen Bissgabel mit hintereinander angeordneten Auflegern.

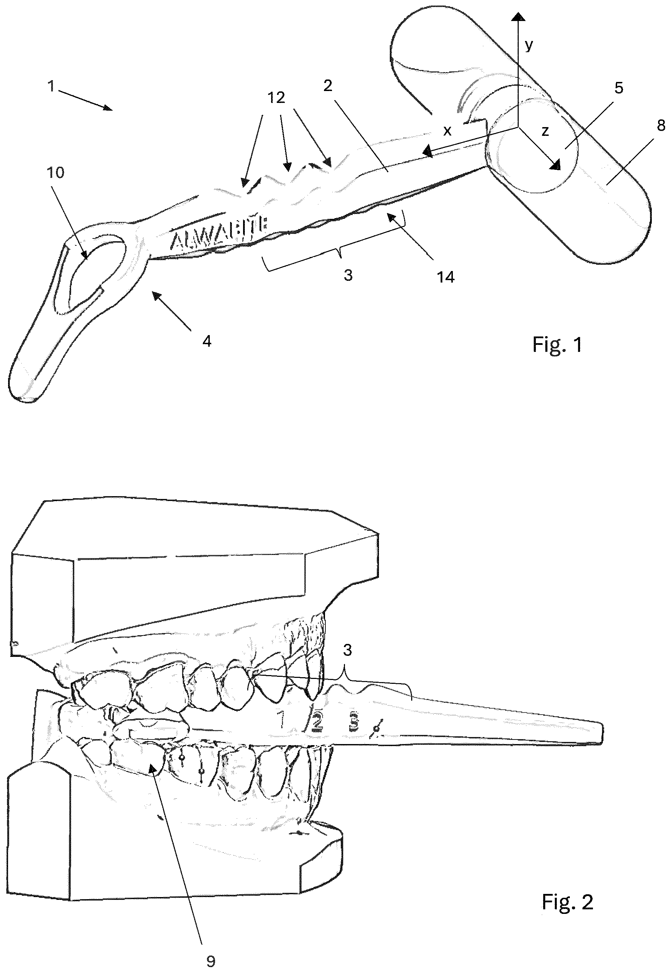

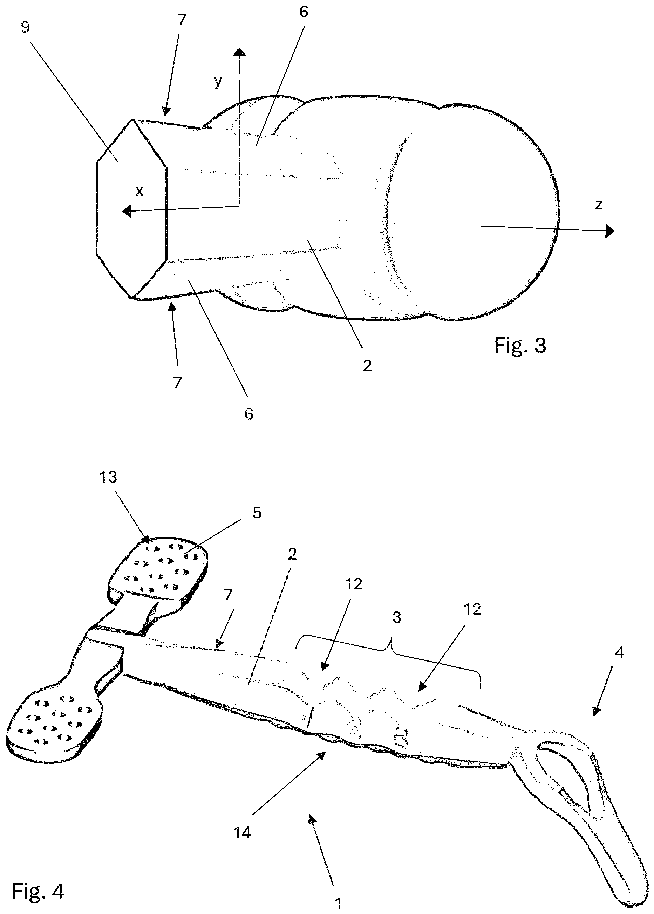

Die in Fig. 1 dargestellte Zeichnung zeigt eine dreidimensionale Darstellung einer Variante einer erfindungsgemässen Bissgabel 1 mit daran vorzugsweise angeordneten Aufbiss-Elementen 7. Die erfindungsgemässe Bissgabel 1 dient dem Positionieren des Ober- und Unterkiefers während der Erstellung eines Scans oder Abdrucks für eine Zahnschiene. Wobei unter einer Zahnschiene ein kieferorthopädisches Geräts wie z.B. eine Aufbiss-Platte, eine Aufbiss-Schiene, ein Monoblock, eine Michigan-Schiene, ein Twin-Block oder auch eine Unterkiefer-Protrusions-Schiene, wie auch weitere mögliche Zahnschienen zu verstehen sind. Die erfindungsgemässe Bissgabel 1 beinhaltet eine Gleitschiene 2. Die Gleitschiene erstreckt sich in x-Richtung bzw. in sagittaler Richtung. Die Gleitschiene 2 weist einen Zahnführungsbereich 3 auf, der im Bereich angeordnet ist, in den die Zähne in jeder Stellung während des Bissnahme-Prozesses in die Gleitschiene 2 greifen. Am vorderen Ende der Gleitschiene 2 ist für eine gute Handhabe ein Griff 4 angeordnet. Wobei der Griff 4 sich vorzugsweise dadurch auszeichnet, dass er während des Bissnahme-Prozesses deutlich aus dem Mund ragt und gut greifbar ist. Der Griff 4 schliesst vorzugsweise integral an die Gleitschiene 2 an, wodurch die Gleitschiene 2 und der Griff 4 zusammen einstückig ausgebildet sind. Vorzugsweis weist die Gleitschiene 2 mit dem daran integral angeordneten Griff 4 eine Mindestlänge von 45mm auf. In Fig. 1 ist eine abgewinkelte Variante des Griffes 4 gezeigt, die zudem ein Sichtfenster 10 aufweist, was die Sicht auf die Schneidezähne während der Bissnahme gewährleistet. Am anderen Ende bzw. am hinteren Ende der Gleitschiene 2 sind mindestens zwei sich gegenüberliegende Aufleger 5 angeordnet. Das heisst, die Aufleger 5 erstecken sich rechtwinklig zur Längsachse in x-Richtung. Die Aufleger 5 sind vorzugsweise leicht elastisch ausgebildet. Die erfindungsgemässe Bissgabel 1 weist somit eine T-Form auf. Die Gleitschiene 2 weist einen Querschnitt 11 bzw. eine Querschnittsform auf, der in y-Richtung keilförmig in eine zur Längsachse x parallel verlaufende Gleitkante 7 zusammenläuft bzw. sich verjüngt, dies ist gut in Fig. 3 ersichtlich. Es ist vorteilhaft, wenn der Querschnitt 11 der Gleitschiene zumindest im Zahnführungsbereich 3 nach unten und oben in y-Richtung keilförmig verläuft und unten und oben jeweils eine parallel dazu verlaufende Gleitkante 7 aufweist, welche dem Eingreifen des zentralen Schneidzahnkreuzes sowohl des Unter- wie auch des Oberkiefers dient, was aus der Fig. 2 erkennbar ist. Der Querschnitt 11 weist somit eine polygene Form auf, die entlang der Y-Achse symmetrisch ausgebildet ist. Vorzugsweise weist der Querschnitt der Gleitschiene 2 eine Breite von mindestens 3 mm auf und verjüngt sich in y-Richtung. Die Höhe der Gleitschiene 2 über die beiden Gleitkanten 7 beträgt vorzugsweise mindestens 5mm. Vorzugsweis weist die Gleitschiene 2 eine prismatische Form auf mit einem polygenen Querschnitt 11, wobei das Prisma in y-Richtung jeweils zwei nach unten und oben verlaufende Keilflächen 6 aufweist, die in der Gleitkante 7 zusammentreffen. Die erfindungsgemässe Bissgabel 1 weist drei Auflagepunkte zur stabilen Bissnahme auf. Dadurch, dass der Kiefer nur an drei Punkten an der Bissgabel 1 aufliegt, jeweils links und rechts im Molar-Bereich 9 und einmal mit dem zentralen Schneidekreuz ist die Bissgabel statisch optimal bestimmt, dies ist gut in Fig. 2 zu erkennen, in der die Bissgabel 1 in der Stellung, in der der Scan durchgeführt wird, gezeigt ist. Wobei diese stabile Position selbstverständlich auch in der maximalen Vorschubstellung und der effektiven Stellung für die Bissaufnahme, welche in der Regel genau zwischen der maximalen Vorschubstellung und der Normalstellung ist, besteht. Vor der effektiven Stellung zur Durchführung des Scans oder Abdrucks muss der Patient die Normalstellung einnehmen, woraufhin eine Markierung an der Gleitschiene 2 bzw. der unteren Gleitkante 7 angebracht wird um die Position des Unterkiefers zu markieren. Als nächster Schritt wird die Position in maximaler Vorschubstellung markiert, dass heisst, wenn der Unterkiefer eine maximale Protrusion gegenüber dem Oberkiefer aufweist. Die Stellung dazwischen ist dann die Stellung, in der der Scan oder Abdruck durchgeführt wird, wobei es vorteilhaft ist eine Kerbe in der unteren Gleitkante vorzusehen damit der Patient eine bessere Arretierung hat. Gut ersichtlich ist auch in Fig. 2, dass eine gute Zugänglichkeit für einen Scan gegeben ist und labial und bukkal nichts durch die erfindungsgemässe Bissgabel 1 verdeckt oder versperrt ist.

Als vorteilhaft hat sich gezeigt, wenn in der Gleitschiene 2 bzw. in der oberen Gleitkante 7 Einbissrillen 12 angeordnet sind. Diese gewährleisten eine sagittale Fixierung während des Bissnahme-Prozesses. Vorzugsweise sind die Einbissrillen nummeriert, was bei der Auswertung oder auch bei einer erneuten Positionierung des Kiefers hilfreich ist. Die Einbissrillen 12 sind vorzugsweise im Zahnführungsbereich 3 angeordnet. Die Einbissrillen 12 sind vorzugsweise fortlaufend aneinandergereiht und weisen regelmässige Abstände auf. Aus den Figuren ist gut zu erkennen, dass auch die Einbissrillen 12 den keilförmigen Verlauf des Querschnitts 11 aufweisen und eine Verjüngung in y-Richtung haben. Alle Figuren bis auf Fig. 4 zeigen die Variante von integral angeordneten Auflegern 5, so dass die Bissgabel 1 mit der Gleitschiene 2, dem Griff 4 und den Auslegern 5 als ein Teil ausgebildet ist, das vorzugsweise im 3D Druck hergestellt wird. Fig. 4 zeigt eine Variante der Bissgabel 1 bei der die Aufleger 5 als separate Teile ausgebildet sind und mit der Gleitschiene 2 zusammengefügt werden.

Ebenfalls als vorteilhaft hat sich gezeigt, wenn die untere Gleitkante 7 ein Wellenprofil 14 aufweist. Dies erleichtert ebenfalls das Innehalten in der exakt definierten Kieferstellung und es ist nicht mehr notwendig eine Kerbe in der unteren Gleitkante 7 für eine bessere Arretierung vorzusehen.

Unabhängig ob die Aufleger 5 als separate Teile ausgebildet sind oder integral an der Bissgabel 1 angeordnet sind, weisen die Aufleger 5 vorzugsweise ein Perforation 13 oder eine Struktur 13 in der Oberfläche der Aufleger 5 auf. Dies gewährt einen Gripp am Aufleger 5, wodurch vermieden wird, dass das Wachs oder Silikon für einen analogen Abbruch sich vom Aufleger 5 löst oder verschiebt während der Bissnahme.

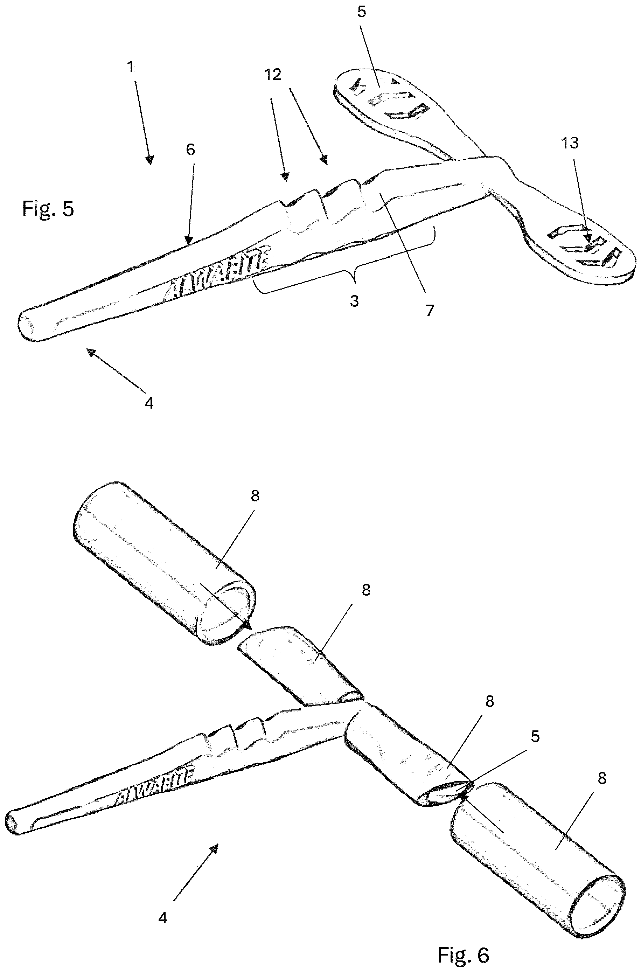

Fig. 5 zeigt eine einstückig bzw. einteilig ausgebildete Bissgabel 1 mit einem geraden Griff 4 und Auflegern 5, die eine Perforation 13 aufweisen. Diese Bissgabel 1 kann einerseits für eine analoge Bissnahme mit Wachs oder Silikon wie auch eine digitale Bissnahme eingesetzt werden. Vorzugsweis wird zur digitalen Bissnahme noch ein Aufbiss-Element 8 an den Auflegern 5 angebracht wie in Fig. 6 gezeigt.

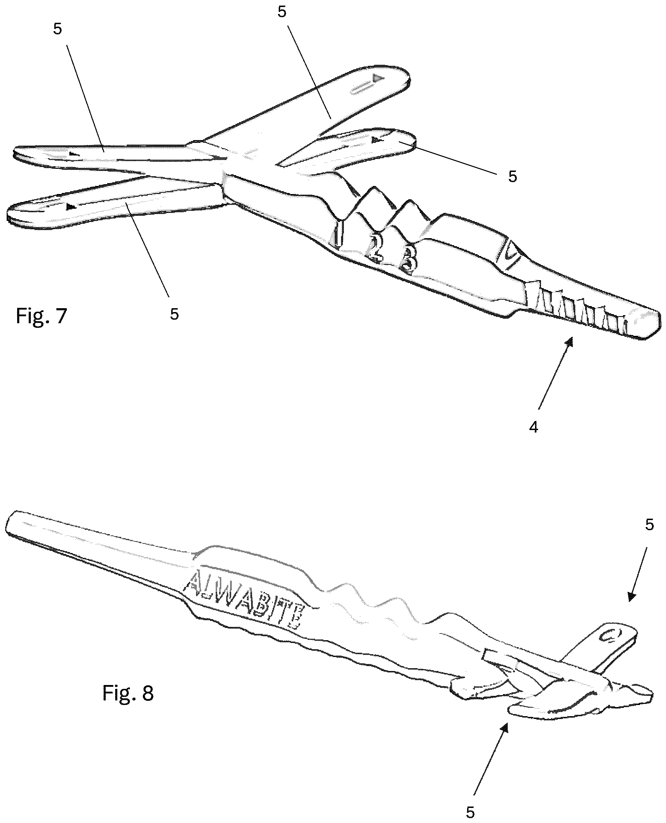

Fig. 7 zeigt einer erfindungsgemässe Bissgabel 1 bei der jeweils zwei der Aufleger 5 auf beiden Seiten der Gleitschiene 2 angeordnet sind. Wobei die Aufleger 5 fächerartig hintereinander angeordnet sind, was den Auflegern 5 die gewünschte Elastizität zur Bissnahme gewährleistet.

Auch die in Fig 8 abgebildete Ausführungsform der erfindungsgemässen Bissgabel 1 gewährleistet die Elastizität der Aufleger 5 aufgrund der mehreren Aufleger 5, die beidseitig der Gleitschiene 2 hintereinander entlang der Längsachse x angeordnet sind. Die Aufleger 5 sind ebenfalls fächerartig zueinander ausgerichtet bzw. sind schräg geneigt zueinander angeordnet.

### Bezugszeichenliste

- 1: Bissgabel
- 2: Gleitschiene
- 3: Zahnführungsbereich
- 4: Griff
- 5: Aufleger
- 6: Keilfläche
- 7: Gleitkante
- 8: Aufbiss-Element
- 9: Molar-Bereich
- 10: Sichtfenster
- 11: Querschnitt Gleitschiene
- 12: Einbissrillen
- 13: Perforation, Struktur
- 14: Wellenprofil

## Patentansprüche

1. Bissgabel (1) zum Positionieren des Ober- und Unterkiefers während einer Erstellung eines Scans oder Abdrucks für eine Zahnschiene oder ein anderes zahnmedizinisches Hilfsmittel, beinhaltend eine sich entlang einer Längsachse x erstreckende, einen Zahnführungsbereich (3) aufweisende Gleitschiene (2), eine x,y-und z-Achse, einen am einen Ende der Gleitschiene (2) angeordneten Griff (4) und mindestens zwei am anderen Ende der Gleitschiene (2), sich gegenüberliegend angeordnete Aufleger (5), wobei die Aufleger (5) sich rechtwinklig zur Längsachse x erstrecken, **dadurch gekennzeichnet, dass** die Gleitschiene (2) mindestens über den Zahnführungsbereich (3) einen Querschnitt (11) aufweist, der in y-Richtung keilförmig in eine zur Längsachse x parallel verlaufende Gleitkante (7) zusammenläuft.

2. Bissgabel (1) nach Anspruch 1, **dadurch gekennzeichnet, dass** der Querschnitt (11) jeweils nach unten und oben in y-Richtung keilförmig in jeweils eine zur Längsachse x parallel verlaufende Gleitkante (7) zusammenläuft.

3. Bissgabel (1) nach einem der Ansprüche 1 oder 2, **dadurch gekennzeichnet, dass** die beiden Aufleger (5) und die Gleitkante (7) drei Auflagepunkte für den Ober- und Unterkiefer bilden.

4. Bissgabel (1) nach einem der Ansprüche 1 bis 3, **dadurch gekennzeichnet, dass** die Gleitschiene (2) zumindest entlang des Zahnführungsbereichs (3), als ein sich entlang der Längsachse x erstreckendes gerades Prisma ausgebildet ist.

5. Bissgabel (1) nach einem der Ansprüche 1 bis 4, **dadurch gekennzeichnet, dass** die Gleitschiene (2) zumindest über den Zahnführungsbereich (3) einen polygonförmigen Querschnitt (11) aufweist.

6. Bissgabel (1) nach einem der Ansprüche 1 bis 5, **dadurch gekennzeichnet, dass** in der Gleitschiene (2) entlang der oberen Gleitkante (7) Einbissrillen (12) angeordnet sind.

7. Bissgabel (1) nach einem der Ansprüche 1 bis 6, **dadurch gekennzeichnet, dass** die Auflager (5) abnehmbar und als separate Teile ausgebildet sind.

8. Bissgabel (1) nach einem der Ansprüche 1 bis 6, **dadurch gekennzeichnet, dass** die Auflager (5) integral an der Gleitschiene (2) angeordnet sind, wodurch die Gleitschiene (2) und die Aufleger (5) zusammen ein Teil bilden.

9. Bissgabel (1) nach einem der Ansprüche 1 bis 8, **dadurch gekennzeichnet, dass** die Auflager (5) sich parallel zur z-Achse erstecken.

10. Bissgabel (1) nach einem der Ansprüche 1 bis 9, **dadurch gekennzeichnet, dass** die Aufleger (5) eine Struktur (13) oder eine Perforation (13) für eine gute Haftung aufweisen.

11. Bissgabel (1) nach einem der Ansprüche 1 bis 10, **dadurch gekennzeichnet, dass** an den Auflegern (5) Aufbiss-Elemente (8) angeordnet sind.

12. Bissgabel (1) nach einem der Ansprüche 1 bis 11, **dadurch gekennzeichnet, dass** der Griff (4) in einem Winkel zur Längsachse x verläuft.

13. Bissgabel (1) nach einem der Ansprüche 1 bis 12, **dadurch gekennzeichnet, dass** die Bissgabel (1) jeweils zwei sich gegenüberliegende, hintereinander angeordneten Aufleger (5) aufweist.

14. Bissgabel (1) nach einem der Ansprüche 1 bis 13, **dadurch gekennzeichnet, dass** die Bissgabel (1) aus Kunststoff, Holz oder Metall besteht.

15. Bissgabel (1) nach einem der Ansprüche 1 bis 14, **dadurch gekennzeichnet, dass** die Bissgabel (1) im 3D-Druck Verfahren hergestellt ist.
